(19) Europäisches Patentamt
European Patent Office
Office européen des brevets

(11) EP 4 663 690 A1

(12) EUROPEAN PATENT APPLICATION

(43) Date of publication:
**17.12.2025 Bulletin 2025/51**

(21) Application number: **24181730.3**

(22) Date of filing: **12.06.2024**

(51) International Patent Classification (IPC):
***C08J 5/18*** *(2006.01)* ***C08L 23/12*** *(2006.01)*

(52) Cooperative Patent Classification (CPC):
(C-Sets available)
**C08L 23/12; C08J 5/18; H01G 4/18;** C08J 2323/12; C08J 2469/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **Tranchida, Davide Domenico**
**4021 Linz (AT)**
- **Gkourmpis, Thomas**
**444 86 Stenungsund (SE)**
- **Schaffer, Walter**
**4021 Linz (AT)**
- **Gitsas, Antonios**
**4021 Linz (AT)**
- **Jamieson, Scott**
**4021 Linz (AT)**

(74) Representative: **Ter Meer Steinmeister & Partner Patentanwälte mbB**
**Nymphenburger Straße 4**
**80335 München (DE)**

(54) **BLENDS OF POLYPROPYLENE AND POLYCARBONATE FOR IMPROVED ELECTRICAL CONDUCTIVITY IN CAPACITOR APPLICATIONS**

(57) The present invention relates to a composition comprising more than 80.0 to less than 100.0 wt.% based on the total weight of the polypropylene composition of a high isotactic homopolymer (A) of propylene, and more than 0.0 to less than 20.0 wt.-% based on the total weight of the polypropylene composition of a polycarbonate (B). The composition allows to achieve electrical conductivities which are desirable for high temperature capacitor film applications. Thus, the present invention is, furthermore, directed to a film comprising the polypropylene composition and a biaxially oriented film comprising the polypropylene composition. Additionally, a capacitor comprising the biaxially oriented film is provided.

EP 4 663 690 A1

(52) Cooperative Patent Classification (CPC): (Cont.)

C-Sets
**C08L 23/12, C08L 69/00**

## Description

### Field of the Invention

The present invention relates to a composition comprising more than 80.0 to less than 100.0 wt.-% based on the total weight of the polypropylene composition of a high isotactic homopolymer (A) of propylene, and more than 0.0 to less than 20.0 wt.-% based on the total weight of the polypropylene composition of a polycarbonate (B). The composition allows to achieve electrical conductivities which are desirable for high temperature capacitor film applications. Thus, the present invention is, furthermore, directed to a film comprising the polypropylene composition and a biaxially oriented film comprising the polypropylene composition. Additionally, a capacitor comprising the biaxially oriented film is provided.

### Technical Background

Polypropylene combines low losses with good stretchability and a high melting point. Due to this favorable combination of properties, it has been successfully used as a dielectric in various capacitor film applications. Yet, an issue with known polypropylene capacitor grades is their limited maximum operating temperature. The new generation of inverters, for example traction inverters for electric mobility and inverters for renewable power such as solar and wind, call for a higher temperature resistance of capacitor films.

The demand for an increased maximum operating temperature or - differently speaking - the demand for a higher durability at a predetermined temperature level, has been addressed in a variety of ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene.

More specifically, it provides a polypropylene composition comprising 95.0 to 99.9 wt.-% of propylene homopolymer with a specific melt flow rate and a very low ash content, 0.1 to 5.0 wt.-% of long chain branched polypropylene and up to 1000 ppm of beta-nucleating agent.

WO 2018/210854 A1 and WO 2018/197034 A1 disclose that it may be preferable to blend polypropylene with certain amounts of specific cyclic olefin copolymers in order to obtain materials that are suitable for high temperature capacitor applications. In this context, WO 2018/210854 A1 relies on ethylene norbornene copolymers with specific norbornene contents, whereas WO 2018/197034 A1 suggests cyclic olefin polymers having a glass transition temperature in a broad range from 120 to 170 °C.

However, in the above outlined approaches the increase in the temperature resistance of polypropylene capacitor compositions has only been achieved at the expense of other crucial properties. For example, mechanical properties such as low shrinkage and high stiffness as well as the capability to endure high voltages have been sacrificed to a certain extent.

Apart from the above, there is documentation about fundamental research concerned with blends of polypropylene and other polymers, such as polycarbonate. Dai, S. S. (2010). Elaboration et caractérisation de mélanges de polyméres à base de polypropylène et de polycarbonate à propriétés optimisées (Doctoral dissertation, Institut National Polytechnique de Lorraine), for example, explores the possibility of blending polypropylene with polycarbonate whose strength and toughness are high in order to improve its toughness while retaining as much as possible its rigidity. The major challenge encountered during the provision of such blends is the limited miscibility of PP and PC because of disparities in polarity and solubility parameters. Hence, the study focuses on compatibilization of polycarbonate and polypropylene blends using hydrogenated styrene-butylene-styrene block polymer or modified polypropylene. Among the studied examples, a compatibilized blend containing 15 wt.-% polycarbonate in 85 wt.-% of a polypropylene with a low crystallization temperature is investigated with respect to its mechanical properties, morphology, and crystallinity.

Favis, B. D., & Chalifoux, J. P. (1987). The effect of viscosity ratio on the morphology of polypropylene/polycarbonate blends during processing. Polymer Engineering & Science, 27(21), 1591-1600 examines the size of the dispersed minor phase as a function of the viscosity ratio in polypropylene/polycarbonate blends after melt processing. The blends have 7 and 23 vol.-% polycarbonate in polypropylene. The polypropylene is a general purpose polypropylene with an isotacticity of 90%.

Electrical properties of polycarbonate/polypropylene blends have only been investigated in Abbas Hummdai, F. (2012). Mechanical, Electrical and Thermal Properties of Polypropylene and Polycarbonate Blend Filled with Carbon Black. Engineering and Technology Journal, 30(12), 2076-2086. More specifically, this article studies the physical and electrical properties of 20 wt.-% polycarbonate in polypropylene blends with varying amounts of carbon black reinforcement. Increased carbon black loading increases the electrical and thermal conductivity while reducing the compression

properties of the polymeric blends. However, the 20 wt.-% polycarbonate in polypropylene blend with 0 wt.-% carbon black was found to have a high volume resistance ($1.00 \cdot 10^9$ Ohm·cm at room temperature).

Pure polycarbonate or compositions with a predominant content of polycarbonate have also been used as a dielectric in various capacitor film applications. An advantage of polycarbonate capacitor films is the low temperature dependence of their electrical properties. However, amongst other reasons, the cost of producing suitable films from polycarbonate has limited its applicability. One example of preparing a blend with a predominant content of polycarbonate is outlined in WO 2016/100660 A1.

Thus, there is still a need to provide polypropylene compositions having an improved property set for capacitor applications, *i.e.* composition having a high temperature resistance, and a low electrical conductivity. Ideally, the polypropylene composition should also retain the good mechanical properties of pure PP. Accordingly, it is an objective of the present invention to overcome the disadvantages of known compositions and to provide an according polypropylene composition. Another objective of the present invention is the provision of a polypropylene film having superior performance in capacitor applications. Last but not least, the present invention aims at providing a capacitor with improved specifications. Furthermore, capacitor films also need to have a low electrical conductivity and good mechanical properties such as a low shrinkage and a high stiffness.

## Summary of the Invention

The above identified needs are satisfied by the polypropylene composition according to claim 1, the film according to claim 7, the biaxially oriented film according to claim 12, and the capacitor according to claim 13. Advantageous embodiments may be derived from the dependent claims.

## Detailed Description of the Embodiments

The polypropylene composition according to the present invention comprises more than 80.0 to less than 100.0 wt.-% based on the total weight of the polypropylene composition of a high isotactic homopolymer (A) of propylene, and more than 0.0 to less than 20.0 wt.-% based on the total weight of the polypropylene composition of a polycarbonate (B). The contents of components (A) and (B) preferably add up to 100 wt.-%. With these ratios of components, the composition exhibits less temperature dependent electrical conductivities. This makes the compositions suitable for high temperature capacitor film applications.

In an embodiment, the polypropylene composition comprises more than 82.5 to less than 99.5 wt.-%, preferably 85.0 or more to less than 99.0 wt.-%, based on the total weight of the polypropylene composition of the high isotactic homopolymer (A) of propylene, and more than 0.5 to less than 17.5 wt.-%, preferably more than 1.0 to 15.0 wt.-% or less, based on the total weight of the polypropylene composition of the polycarbonate (B). In these preferred embodiments, electrical conductivity of the composition at high temperature is further improved, i.e. lowered.

Adding a polycarbonate (B) to a high isotactic homopolymer (A) of propylene is technically advantageous because the polycarbonate (B) partially compensates for the increase of electrical conductivity with temperature which is inherent to the high isotactic homopolymer (A) of propylene. Moreover, the combination of a polycarbonate (B) and a high isotactic homopolymer (A) of propylene results in favorable mechanical properties and, thus, facilitates the processing of the composition into films for capacitor applications.

In a preferred embodiment, the polypropylene composition according to the invention is obtained by melt-blending the high isotactic homopolymer (A) of propylene and the polycarbonate (B). A device, in which melt-blending can be carried out, may be selected from the group consisting of kneaders, mills and extruders.

In contrast to dry-blending approaches, the melt-blending approach allows producing the polypropylene composition with high homogeneity. By selecting the content of the polycarbonate (B) to be more than 0.0 to less than 20.0 wt.-%, the polycarbonate (B) is rather uniformly dispersed in a matrix of the high isotactic homopolymer (A) of propylene despite the limited miscibility of the two components. The dimensions and the shape of the domains which are formed by the polycarbonate (B) in the composition can be analyzed with an atomic force microscope (AFM) or another type of microscope.

### Component (A)

The expression "homopolymer (A) of propylene" as used in the present invention relates to a polypropylene that consists substantially, *i.e.* of at least 99.5 wt.-%, more preferably of at least 99.8 wt.-%, of propylene units. Preferably, only propylene units are detectable in the propylene homopolymer via $^{13}C$ NMR spectroscopy, as described in the example section below.

The high isotactic homopolymer (A) of propylene preferably is a linear polypropylene, *i.e.* a polypropylene that does not have a detectable amount of long-chain or short-chain branches.

In a preferred embodiment of the present invention, the high isotactic homopolymer (A) of propylene is characterized by a rather high pentad isotacticity <mmmm>, measured by $^{13}C$ NMR. More specifically, the high isotactic homopolymer (A) of propylene may have an isotactic pentad fraction of from 93 to 99.5 %, preferably 95 to 99.0 %, more preferably from 96 to 98.5 %. In particular embodiments, the pentad isotacticity of the high isotactic homopolymer (A) of propylene is in the range of 96.0 to 98.5 %, still more preferably in the range of 97.0 to 98.0 %.

The high isotacticity preferably goes along with a high crystallinity of the material. Moreover, the high isotacticity is preferably accompanied by a low xylene cold soluble (XCS) content. Therefore, in a further preferred embodiment of the present invention, the high isotactic homopolymer of propylene of the present invention is featured by a rather low XCS content, *i.e.* by a XCS content of equal or below 2.0 wt.-%, more preferably of equal or below 1.8 wt.-%, yet more preferably equal or below 1.6 wt.-%. Thus, it is in particular appreciated that the high isotactic homopolymer of propylene of the present invention has a XCS content in the range of 0.3 to equal or below 2.5 wt.-%, more preferably in the range of 0.3 to equal or below 2.0 wt.-%, yet more preferably in the range of 0.4 to equal or below 1.8 wt.-%.

Preferably, the XCS content refers to the XCS content as determined at 23 °C according to ISO 6427. It is further appreciated that the XCS content indicates that the high isotactic homopolymer of propylene is preferably free of any elastomeric polymer component, like an ethylene propylene rubber. In other words, the high isotactic homopolymer of propylene does not correspond to a heterophasic polypropylene, *i.e.* a system consisting of a polypropylene matrix in which an elastomeric phase is dispersed. Such systems are usually featured by a rather high xylene cold soluble content.

As an alternative to $^{13}C$ NMR, the isotacticity of polypropylene can also be measured by infrared spectroscopy (IR) techniques, such as the technique disclosed in US 3511824 A. The isotacticity values obtained by such IR techniques have proven to be equivalent to those obtained by the $^{13}C$ NMR techniques described herein.

The use of high isotactic polypropylene is advantageous because it is associated with an appropriate isotacticity. A too low content of isotactic pentad fraction has a consequence that the final crystallinity of a film made from the composition becomes rather low, and the tensile properties and moduli of the film decrease. On the other hand, a too high content of isotactic pentad fraction has the consequence that there may be frequent film breaks once the composition is used for making films that are orientated in machine direction and/or transverse direction.

Alternatively, or in addition, it is preferred that the high isotactic homopolymer (A) of propylene of the present invention has a melt flow rate given in a specific range. Preferably, the high isotactic homopolymer of propylene has a $MFR_2$ (2.16 kg, 230 °C), measured according to ISO 1133, of from 0.4 to 10 g/10 min, preferably of from 0.5 to 5 g/10 min. In a particularly preferred embodiment, the high isotactic homopolymer (A) of propylene has a $MFR_2$ (2.16 kg, 230 °C), measured according to ISO 1133, of from 2.0 to 4.5 g/10 min. In this context, it is acknowledged that $MFR_2$ (2.16 kg, 230 °C) denotes a melt flow rate measured under a load of 2.16 kg at 230 °C.

The high isotactic homopolymer (A) of propylene preferably has a polydispersity, expressed as Mw/Mn and determined by means of Gel Permeation Chromatography according to ISO 16014-1:2019, of more than 6.5, preferably of more than 7.5 to 20, in particular of from 8 to 15, such as from 9 to 12.

Furthermore, the high isotactic homopolymer (A) of propylene preferably has an ash content of 60 ppm or less, more preferably 30 ppm or less. Preferably, the ash content may be in a range from 5 to 30 ppm, in particular in a range from 10 to 20 ppm. A low ash content is crucial for the dielectric properties, such as the dielectric strength and the dielectric loss. The ash content may be measured according to ISO 3451-1 (1997).

The crystallization temperature, Tc, of the high isotactic homopolymer (A) of propylene as measured according to ISO 11357 may be in a range of from 110 to 130 °C, preferably of from 110 to 120 °C. Besides that, the high isotactic homopolymer of propylene may have a melting temperature, Tm, measured according to ISO 11357, in a range of from 150 to 170°C, preferably 160 to 170 °C.

Additives

The high isotactic homopolymer (A) of propylene may also comprise one or more additives. Preferably the one or more additives are present in a content from 0 to 2.0 wt.-%, more preferably in an amount from 0.05 to 1.0 wt.-%, in particular in an amount from 0.05 to 0.5 wt.-%, based on the weight of the high isotactic homopolymer (A) of propylene.

The one or more additives may be non-polymeric additives and/or polymeric additives, with non-polymeric additives being preferred. For example, the one or more additives may be selected from the group consisting of antioxidants, stabilizers, acid scavengers, nucleating agents, colorants, plasticizers, slip agents, antiscratch agents, lubricants, pigments, antistatic agent, and the like. It is particularly preferred when the one or more additives are selected from the group consisting of antioxidants, stabilizers and acid scavengers and combinations thereof.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythritol tetrakis(3-(3,5-di-tert-butyl-4-hydroxyphenyl)propionate) (sold

under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the high isotactic homopolymer (A) of propylene. More preferably, antioxidants and stabilizers are present in a total amount of from 800 to 7000 ppm, still more preferably of from 1000 to 6000 ppm, and in particular from 1500 to 6000 ppm, based on the total weight of the high isotactic homopolymer (A) of propylene. In view of the desired application of the composition in the capacitor field, the antioxidants and stabilizers preferably do not contain phosphorous containing secondary antioxidants, such as tris(2,4-ditert-butylphenyl)phosphite. Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 20 ppm to 2000 ppm, more preferably from 50 ppm to 1000 ppm, most preferably from 60 to 600 ppm, based on the total weight of the high isotactic homopolymer of propylene (A).

Thus, the one or more additives may, for example, be selected from the group consisting of pentaerythritol tetrakis(3-(3,5-di-tert-butyl-4-hydroxyphenyl)propionate) (sold under trade names Irganox 1010 Anox 20, Ethanox 310TF and Kinox-10), butylhydroxytoluene (sold under trade names Ionol CP and Vulkanox BHT), calcium stearate and combinations thereof.

<u>Component (B)</u>

The terms "polycarbonate" or "polycarbonates" as used herein includes copolycarbonates, homopolycarbonates and (co)polyester carbonates.

In an embodiment component (B) is a polycarbonate which comprises repeating structural units of formula (1):

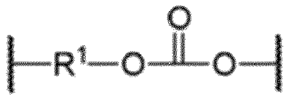
(1)

wherein each $R^1$ is an aromatic organic, aliphatic, or alicyclic residue, wherein at least 60% of the total number of $R^1$ groups are aromatic organic residues. The aromatic organic residue is preferably a residue of formula (2):

$$-A^1-Y^1-A^2- \quad (2),$$

wherein each of $A^1$ and $A^2$ is independently a monocyclic divalent aryl residue, and $Y^1$ is a bridging residue having one or two atoms that separate $A^1$ from $A^2$, wherein $Y^1$ is selected from -O-, -S-, -S(O)-, $-S(O_2)-$, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The monocyclic divalent aryl residue is preferably phenylene. $Y^1$ is preferably isopropylidene.

The polycarbonate may be formed from the reaction of a diol monomer. The diol monomer may be a bisphenol. Preferably, the diol monomer is bisphenol A.

In a specific embodiment, component (B) is a polycarbonate according to formula (3) below:

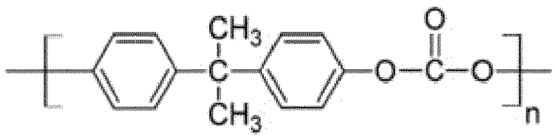
(3).

The use of more than 0.0 to less than 20.0 wt.-% based on the total weight of the polypropylene composition of a polycarbonate (B) allows for the improvement of electrical properties, when compared to neat polypropylene. Specifically, the inclusion of more than 0.0 to less than 20.0 wt.-% based on the total weight of the polypropylene composition of a polycarbonate (B) allows for a reduction in electrical conductivity in comparison to polypropylene without polycarbonate.

Additionally, polycarbonate is known to offer very low temperature dependence of properties in capacitor films,

such as, low dissipation losses at temperatures up to 150 °C. This reduces internal heat generation and stabilizes hot spot temperatures. The fine dispersion of polycarbonate particles contributes the mentioned advantages to the properties of the films, while preserving the high processability of the polypropylene.

The use of polycarbonate in amounts of 20.0 wt.-% or higher does not further improve the electrical properties at high temperature. Therefore, a preferred embodiment has less than 17.5 wt.-%, preferably 15.0 wt. % or less, based on the total weight of the polypropylene composition of the polycarbonate (B).

In a preferred embodiment of the present invention, the polycarbonate (B) has a MFR (1.2 kg, 300 °C), measured according to ISO 1133, of from 2.0 to 30.0 g/10 min, preferably of from 5 to 25 g/10 min, more preferably of from 6 to 22 g/10 min. Most preferably, the the polycarbonate (B) has a MFR (1.2 kg, 300 °C), measured according to ISO 1133, of 6.5 g/10 min. In this context, it is acknowledged that MFR (1.2 kg, 300 °C) denotes a melt flow rate measured under a load of 1.2 kg at 300 °C.

Alternatively, or in addition, it is preferred that the polycarbonate (B) of the present invention has a density measured according to ISO 1183 of from 1.1 to 1.3 g/cm$^3$. More preferably, the polycarbonate (B) of the present invention has a density measured according to ISO 1183 of from 1.2 g/cm$^3$.

The polycarbonate (B) may further have a tensile modulus, determined according to ISO 527-3 at room temperature on films with a thickness of 1 to 100 μm, preferably 2 to 50 μm, of more than 2000 MPa, preferably of from 2200 to 2600 MPa. The tensile strength of the polycarbonate, also determined according to ISO 527-3 at room temperature on films with a thickness of 1 to 100 μm, preferably 2 to 50 μm, may be from 20 to 100 MPa, in particular from 50 to 80 MPa.

In an embodiment, the polycarbonate (B) comprises at least one additive, preferably a heat stabilizer, in particular a phosphorous acid-ester based heat stabilizer. In certain embodiments, it may be advantageous if the polycarbonate (B) comprises one or more heat stabilizer compounds only, i.e. a heat stabilizer as the only additive.

Additives

As outlined above, both components (A) and (B) may comprise additives.

Film

The present invention furthermore provides a film comprising the polypropylene composition as described above. The film may be a compression moulded film. In this case, the film may be produced by means of a mould with a thickness of 10 to 300 μm, preferably with a thickness of 10 to 100 μm, more preferably with a thickness of 20 to 80 μm, in particular with a thickness of 60 μm, and at a temperature in a range from 190 to 230 °C. Alternatively, the film may be a cast film.

The film preferably has a thickness from 1 to 1000 μm, more preferably from 1 to 300 μm, most preferably from 1 to 250 μm, in particular from 1 to 100 μm. This is especially advantageous since current attempts are to provide electric systems with higher energy density and efficiency. Reducing the space requirement for a film in film capacitors helps to achieve this goal.

In an embodiment, the film has an electrical conductivity of less than $6.0 \cdot 10^{-14}$ S/cm, preferably less than $5.0 \cdot 10^{-14}$ S/cm, more preferably in a range of from more than $5.0 \cdot 10^{-16}$ S/cm to less than $3.0 \cdot 10^{-14}$ S/cm, wherein the electrical conductivity is measured by means of a dielectric spectrometer with an alternating current at a frequency of $10^{-2}$ Hz at a temperature of 140 °C and on the film having a thickness of 100 μm.

In another embodiment, the film has an electrical conductivity of less than $1.0 \cdot 10^{-14}$ S/cm, preferably less than $9.0 \cdot 10^{-15}$ S/cm, more preferably in a range of from more than $1.0 \cdot 10^{-16}$ S/cm to less than $8.0 \cdot 10^{-15}$ S/cm, wherein the electrical conductivity is measured by means of a dielectric spectrometer with an alternating current at a frequency of $10^{-2}$ Hz at a temperature of 130 °C and on the film having a thickness of 100 μm.

In yet another embodiment, the film has an electrical conductivity of less than $1.0 \cdot 10^{-16}$ S/cm, preferably less than $5.0 \cdot 10^{-17}$ S/cm, wherein the electrical conductivity is measured by means of a dielectric spectrometer with an alternating current at a frequency of $10^{-2}$ Hz at room temperature and on the film having a thickness of 100 μm. In this context, it is understood that room temperature refers to 20 °C.

The morphology of the films of the present invention can be analysed using atomic force microscopy (AFM). In an embodiment, the average diameter of the domains of the polycarbonate (B) as visually determined in AFM images of 10x10 μm$^2$ cut-outs of the film with a thickness of 300 μm is less than 2.0 μm, preferably in a range of from 0.1 to less than 2.0 μm, more preferably in a range of from 0.2 to 1.0 μm. The average of the diameter may be based on an evaluation of more than 30 samples. The average diameter of the domains of the polycarbonate (B) as visually determined in AFM images of 10x10 μm$^2$ cut-outs of the film with a thickness of 300 μm may be equivalent to the average diameter of the domains of the polycarbonate (B) as visually determined in AFM images of extruded strands of the polypropylene composition.

Biaxially oriented film

The present invention furthermore provides a biaxially oriented film (BOPP) comprising the polypropylene composition described above. In particular, the film can be a cast film that has been biaxially oriented (BOPP).

The biaxially oriented film according to the present invention may be obtained in two steps. In a first step, a non-oriented film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may preferably be conducted in a continuous process. Alternatively, the non-oriented film may be collected and cooled with a rotating chill roll for solidification of the film and may later on be stretched.

In an embodiment, the biaxially oriented polypropylene film comprises at least 80 wt.-%, more preferably comprises at least 90 wt.-%, yet more preferably consists of, the polypropylene composition as defined in the present invention. The biaxially oriented polypropylene film preferably has a stretching ratio of at least 2.5 times, preferably at least 3.0 times, more preferably at least 4 times, in particular at least 5 times, in the machine direction and at least 2.5 times, preferably at least 3.0 times, more preferably at least 4 times, in particular at least 5 times, in the transverse direction, more preferably has a stretching ratio of at least 9 times in the machine direction and at least 5 times in the transverse direction.

The biaxially oriented polypropylene film can be prepared by conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, this enhances the adhesive strength to the metal that is to be deposited.

Capacitor

In another aspect, the present invention relates to a capacitor comprising the biaxially oriented film as described above. Capacitors comprising this biaxially oriented film are expected to have a longer lifetime and a higher temperature resistance than conventional capacitors. Preferably, the biaxially oriented film as described above is metallized and the capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 $\mu$m) to 5000 Å (0.5 $\mu$m).

In particular embodiments, the capacitor comprises a polypropylene composition which comprises 85.0 or more to less than 99.0 wt.-% based on the total weight of the polypropylene composition of the high isotactic homopolymer (A) of propylene, and more than 1.0 to 15.0 wt.-% or less based on the total weight of the polypropylene composition of the polycarbonate (B). The high isotactic homopolymer (A) of propylene has the following properties: a content of isotactic pentad fraction, measured with $^{13}$C NMR, of from 95 to 99 %; a polydispersity of more than 7.5 to 20; and a crystallization temperature (Tc), measured according to ISO 11357, of from 110 to 130 °C. The polycarbonate (B) has the following properties: a MFR (1.2 kg/300°C), measured according to ISO 1133, of from 6 to 22 g/10 min; and a density measured according to ISO 1183 of from 1.1 to 1.3 g/cm$^3$.

In a further particular embodiment, the capacitor comprises a polypropylene composition which comprises 85.0 or more to 97.0 wt.-% or less based on the total weight of the polypropylene composition of the high isotactic homopolymer (A) of propylene, and 3.0 or more to 15.0 wt.-% or less based on the total weight of the polypropylene composition of the polycarbonate (B). The high isotactic homopolymer (A) of propylene has the following properties: a content of isotactic pentad fraction, measured with $^{13}$C NMR, of from 96 to 98.5 %; a polydispersity of from 8 to 15; and a crystallization temperature (Tc), measured according to ISO 11357, of from 110 to 120 °C. The polycarbonate (B) has the following properties: a MFR (1.2 kg/300 °C), measured according to ISO 1133, of 6.5 g/10 min; and a density measured according to ISO 1183 of 1.2 g/cm$^3$. The polycarbonate (B) comprises a heat stabilizer.

**Brief Description of the Drawings**

Embodiments of the present invention are illustrated by way of example and are not limited by the figures of the

accompanying drawings.

**Figs. 1 to 3** show AFM images of the distribution of polycarbonate particles into the polypropylene matrix of IE2-IE4.

## Detailed Description of the Drawings and Examples

Measurement Methods

*Quantification of isotacticity by NMR spectroscopy*

Quantitative nuclear-magnetic resonance (NMR) spectroscopy was used to quantify the isotacticity of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probehead at 125 °C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad <mmmm> at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically, the influence of regio defects on the quantification of the tacticity distribution was corrected for by subtraction of representative regio defect integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (\ mmmm\ /\ \text{sum of all pentads}\ )$$

If needed, the absence of ethylene in the high isotactic homopolymer of propylene can be quantified using the method of Wang et. al. (Wang, W-J., Zhu, S., Macromolecules 33 (2000), 1157) through integration of multiple signals across the whole spectral region of a $^{13}C\{^1H\}$ spectra acquired using defined conditions. This method was chosen for its accuracy, robust nature and ability to account for the presence of regio-defects, when needed. Integral regions were slightly adjusted to increase applicability to a wider range of comonomer contents.

The ethylene incorporation in mole percent is computed as follows:

$$E\ [mol\%] = 100 * fE$$

The ethylene incorporation in weight percent is calculated as follows:

$$E\ [wt.\text{-}\%] = 100 * (\ fE * 28.05\ ) / (\ (fE * 28.05) + ((1\text{-}fE) * 42.08)\ )$$

*Melt flow rate (MFR)*

The MFR was measured according to ISO 1133 either at a 2.16 kg load and at a temperature of 230 °C (for the high isotactic homopolymer of propylene) or at a 1.2 kg load and at a temperature of 300 °C (for the polycarbonate).

*Crystallization temperature (Tc) and melting temperature (Tm)*

Differential Scanning Calorimetry (DSC) experiments were run on a TA Instruments Q2000 device calibrated with Indium, Zinc, Tin according to ISO 11357/1. The measurements were run under nitrogen atmosphere (50 mL $min^{-1}$) on 5 $\pm$0.5 mg samples in a heat/cool/heat cycle with a scan rate of 10 K/min between -30 °C and 225 °C according to ISO 11357. Crystallization (Tc) and melting (Tm) temperatures were taken as the peaks of the endotherms and exotherms in the cooling cycle and the second heating cycle respectively.

*Polydispersity*

Polydispersity of the polymer, especially the high isotactic polypropylene, is determined by means of Gel Permeation Chromatography according to ISO 16014-1:2019.

*Ash content*

The ash content of the polymer was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

*Conductivity*

Electrical conductivity was measured at various temperatures on compression moulded thin films (100 $\mu$m thickness) with broadband dielectric spectroscopy with an alternating current at a frequency of $10^{-2}$ Hz.

*Atomic force microscope imaging*

AFM images were collected on strands of the polypropylene composition which has been extruded with a microcompounder (e.g. Xplore MC15HT) under the conditions as outlined later. The strands have been cut on an ultra-cryo microtome in the core and perpendicular to the machine direction (MD). No surface treatment has been performed.

The dimensions of the domains which are formed by component (B) were analyzed with an atomic force microscope (AFM).

In addition to the "normal" scan, a scan with a qualitative amplitude-modulation-frequency-modulation (AM-FM) was run, because the latter gives better differentiation of the different phases. Comparisons were made based one images of 10 x 10 $\mu m^2$ large surface areas of the film.

<u>Materials</u>

The examples were prepared from the following components:

*Component (A)*

Component (A) corresponds to isotactic crystalline polypropylene homopolymers P-CE1 in WO 2013/004781 A1. Those homopolymers were produced using diluent-slurry conditions (reactor cascade of five continuously stirred reactors, CSTR) and a commercial Ziegler Natta catalyst ("Lynx®900"). To achieve a high pentad isotacticity, 2500 ppm (relative to the catalyst) of methyl methacrylate (MMA) were used as a donor. Component (A) has a $MFR_2$ of 3.3 g/lOmin, a Tm of 164 °C, a Tc of 115 °C, a polydispersity of 9.4, an ash content of less than 20 ppm, and a content of isotactic pentad fraction, measured with $^{13}C$ NMR of 97.2%, commercially available as HC300BF from Borealis.

*Component (B)*

Polycarbonate with a MFR (300°C, 1.2 kg) of 6.5, and a density of 1.200 $g/cm^3$, commercially available as CT300-GL-000110 from Goodfellow.

Polypropylene compositions

The materials outlined above were combined in the amounts indicated in table 1 below and melt-blended to form sample polypropylene compositions CE1 and IE1-IE4. The samples were prepared using a microcompounder Xplore MC15HT mixing at 230 °C, with 50 rpm and for 3 minutes mixing time.

Sample compositions IE1-IE4 are polypropylene compositions comprising a certain amount of a polycarbonate. Sample composition CE1 is a pure high isotactic homopolymer of polypropylene.

**Table 1:** Components of sample compositions CE1 and IE1-IE4.

| | CE1 | IE1 | IE2 | IE3 | IE4 |
|---|---|---|---|---|---|
| (A) wt.-% | 100 | 97 | 95 | 90 | 85 |
| (B) wt.-% | 0 | 3 | 5 | 10 | 15 |

Films

The polypropylene compositions IE1-IE4 and CE1 were compression moulded into a film using a mould with a thickness of 60 μm. Electrical properties were measured on the non-oriented compression moulded film (which had a thickness of about 100 μm after releasing it from the mould) according to the method as described above. The results of the measurements at various temperatures can be found in Table 2 below.

**Table 2:** Electrical conductivity of sample materials CE1 and IE1-IE4.

| Temperature °C | CE1 $10^{-16}$ S/cm | IE1 $10^{-16}$ S/cm | IE2 $10^{-16}$ S/cm | IE3 $10^{-16}$ S/cm | IE4 $10^{-16}$ S/cm |
|---|---|---|---|---|---|
| 20 | 0.06 | n.a. | 0.06 | 0.05 | 0.07 |
| 110 | 9.35 | 1.33 | 4.84 | 5.96 | 12.3 |
| 120 | 23.0 | 2.01 | 20.5 | 26.1 | 46.2 |
| 130 | 107 | 3.34 | 61.7 | 74.2 | 114 |
| 140 | 616 | 8.53 | 119 | 123 | 186 |
| *n.a.= not available | | | | | |

Here, it may be seen that the electrical conductivity of inventive films IE1-IE4 is improved, *i.e.* lowered, relative to the electrical conductivity of the comparative film CE1 at temperatures above 100 °C.

Morphological properties were measured on strands of the extruded polypropylene compositions according to the method as described above. In particular, AFM images of the films with compositions IE2-IE4 were obtained and are also depicted in figures 1-3. Despite the limited miscibility between PP and PC and the phase separation, a rather finely dispersed phase of component (B) is achieved for films with the inventive compositions IE2-IE4.

## Claims

**1.** A polypropylene composition comprising

more than 80.0 to less than 100.0 wt.-% based on the total weight of the polypropylene composition of a high isotactic homopolymer (A) of propylene, and
more than 0.0 to less than 20.0 wt.-% based on the total weight of the polypropylene composition of a polycarbonate (B).

**2.** Polypropylene composition according to claim 1, comprising

more than 82.5 to less than 99.5 wt.-%, preferably 85.0 or more to less than 99.0 wt.-%, based on the total weight of the polypropylene composition of the high isotactic homopolymer (A) of propylene, and

more than 0.5 to less than 17.5 wt.-%, preferably more than 1.0 to 15.0 wt.-% or less, based on the total weight of the polypropylene composition of the polycarbonate (B).

**3.** Polypropylene composition according to any one of the preceding claims, wherein the high isotactic homopolymer (A) of propylene has at least one of the following properties:

• a content of isotactic pentad fraction, measured with $^{13}C$ NMR, of from 93 to 99.5 %, preferably of from 95 to 99.0 %, more preferably of from 96 to 98.5 %,
• a $MFR_2$ (2.16 kg/230 °C), measured according to ISO 1133, of from 0.4 to 10 g/10 min, preferably of from 0.5 to 5 g/10 min,
• a polydispersity, determined by means of Gel Permeation Chromatography according to ISO 16014-1:2019, of more than 6.5, preferably of more than 7.5 to 20, in particular of from 8 to 15,
• an ash content, measured according to ISO 3451-1 (1997), of 60 ppm or less, preferably 30 ppm or less, and
• a crystallization temperature (Tc), measured according to ISO 11357, of from 110 to 130 °C, preferably from 110 to 120 °C.

**4.** Polypropylene composition according to any one of the preceding claims, wherein the polycarbonate (B) has at least one of the following properties:

• a MFR (1.2 kg/300 °C), measured according to ISO 1133, of from 2.0 to 30.0 g/10 min, preferably of from 5 to 25 g/10 min, more preferably of from 6 to 22 g/10 min; and
• a density measured according to ISO 1183 of from 1.1 to 1.3 $g/cm^3$.

**5.** Polypropylene composition according to any one of the preceding claims, wherein the polycarbonate (B) comprises repeating structural units of formula (1):

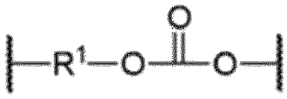 (1),

wherein each $R^1$ is an aromatic organic, aliphatic, or alicyclic residue, wherein at least 60% of the total number of $R^1$ groups are aromatic organic residues,
wherein the aromatic organic residue is preferably a residue of formula (2):

$$-A^1-Y^1-A^2- \quad (2),$$

wherein each of $A^1$ and $A^2$ is independently a monocyclic divalent aryl residue, and $Y^1$ is a bridging residue having one or two atoms that separate $A^1$ from $A^2$, wherein $Y^1$ is selected from -O-, -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene.

**6.** Polypropylene composition according to any one of the preceding claims, wherein the polycarbonate (B) comprises at least one additive, preferably a heat stabilizer, in particular a phosphorous acid-ester based heat stabilizer.

**7.** Film comprising the polypropylene composition according to one of the preceding claims.

**8.** Film according to claim 7, having an electrical conductivity of less than $6.0 \cdot 10^{-14}$ S/cm, preferably less than $5.0- 10^{-14}$ S/cm, more preferably in a range of from more than $5.0 \cdot 10^{-16}$ S/cm to less than $3.0 \cdot 10^{-14}$ S/cm, wherein the electrical conductivity is measured by means of a dielectric spectrometer with an alternating current at a frequency of $10^{-2}$ Hz at a temperature of 140 °C and on the film having a thickness of 100 μm.

**9.** Film according to one of claims 7 or 8, having an electrical conductivity of less than $1.0 \cdot 10^{-14}$ S/cm, preferably less than $9.0 \cdot 10^{-15}$ S/cm, more preferably in a range of from more than $1.0 \cdot 10^{-16}$ S/cm to less than $8.0 \cdot 10^{-15}$ S/cm, wherein the electrical conductivity is measured by means of a dielectric spectrometer with an alternating current at a frequency of $10^{-2}$ Hz at a temperature of 130 °C and on the film having a thickness of 100 μm.

**10.** Film according to one of claims 7 to 9, having an electrical conductivity of less than 1.0 . $10^{-16}$ S/cm, preferably less than $5.0 \cdot 10^{-17}$ S/cm, wherein the electrical conductivity is measured by means of a dielectric spectrometer with an alternating current at a frequency of $10^{-2}$ Hz at 20 °C and on the film having a thickness of 100 μm.

**11.** Film according to one of claims 7 to 10, wherein the average diameter of the domains of the polycarbonate (B) visually determined in AFM images of 10x10 $\mu m^2$ cut-outs of the film with a thickness of 300 μm is less than 2.0 μm, preferably in a range of from 0.1 to less than 2.0 μm, more preferably in a range of from 0.2 to 1.0 μm.

**12.** Biaxially oriented film comprising the polypropylene composition according to one of claims 1 to 6.

**13.** Capacitor comprising the biaxially oriented film according to claim 12.

**14.** Capacitor according to claim 13, wherein the polypropylene composition comprises

85.0 or more to less than 99.0 wt.-% based on the total weight of the polypropylene composition of the high isotactic homopolymer (A) of propylene, and
more than 1.0 to 15.0 wt.-% or less based on the total weight of the polypropylene composition of the polycarbonate (B),
wherein the high isotactic homopolymer (A) of propylene has the following properties:

- a content of isotactic pentad fraction, measured with $^{13}C$ NMR, of from 95 to 99 %,
- a polydispersity, determined by means of Gel Permeation Chromatography according to ISO 16014-1:2019, of more than 7.5 to less than 20, and
- a crystallization temperature (Tc), measured according to ISO 11357, of from 110 to 130 °C,

and wherein the polycarbonate (B) has the following properties:

- a MFR (1.2 kg/300 °C), measured according to ISO 1133, of from 6 to 22 g/10 min; and
- a density measured according to ISO 1183 of from 1.1 to 1.3 $g/cm^3$.

**15.** Capacitor according to claim 14, wherein the polypropylene composition comprises

85.0 or more to 97.0 wt.-% or less based on the total weight of the polypropylene composition of the high isotactic homopolymer (A) of propylene, and
3.0 or more to 15.0 wt.-% or less based on the total weight of the polypropylene composition of the polycarbonate (B),
wherein the high isotactic homopolymer (A) of propylene has the following properties:

- a content of isotactic pentad fraction, measured with $^{13}C$ NMR, of from 96 to 98.5 %,
- a polydispersity, determined by means of Gel Permeation Chromatography according to ISO 16014-1:2019, of from 8 to 15, and
- a crystallization temperature (Tc), measured according to ISO 11357, of from 110 to 120 °C,

wherein the polycarbonate (B) has the following properties:

- a MFR (1.2 kg/300 °C), measured according to ISO 1133, of 6.5 g/10 min; and
- a density measured according to ISO 1183 of 1.2 $g/cm^3$,

and wherein the polycarbonate (B) comprises a heat stabilizer.

Figure 1

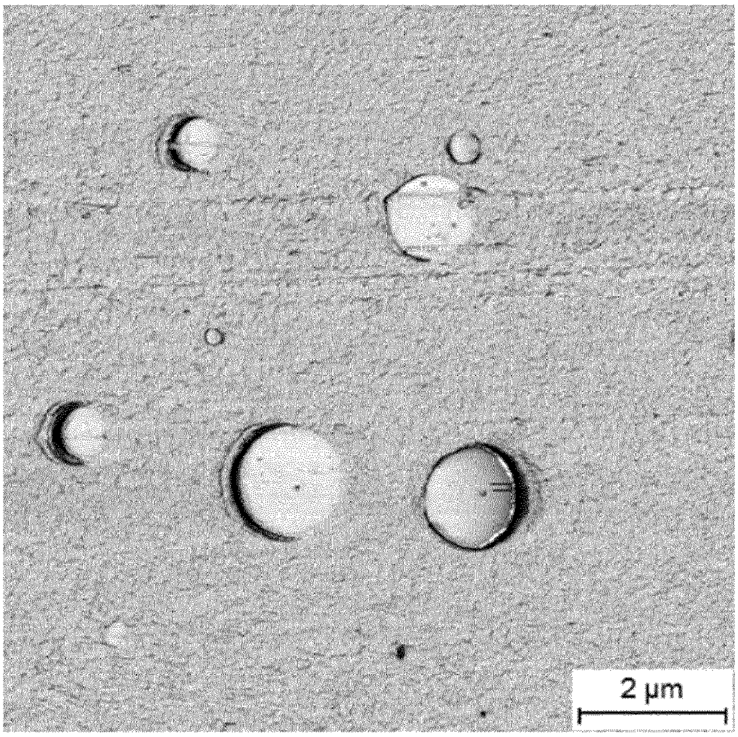


Figure 2

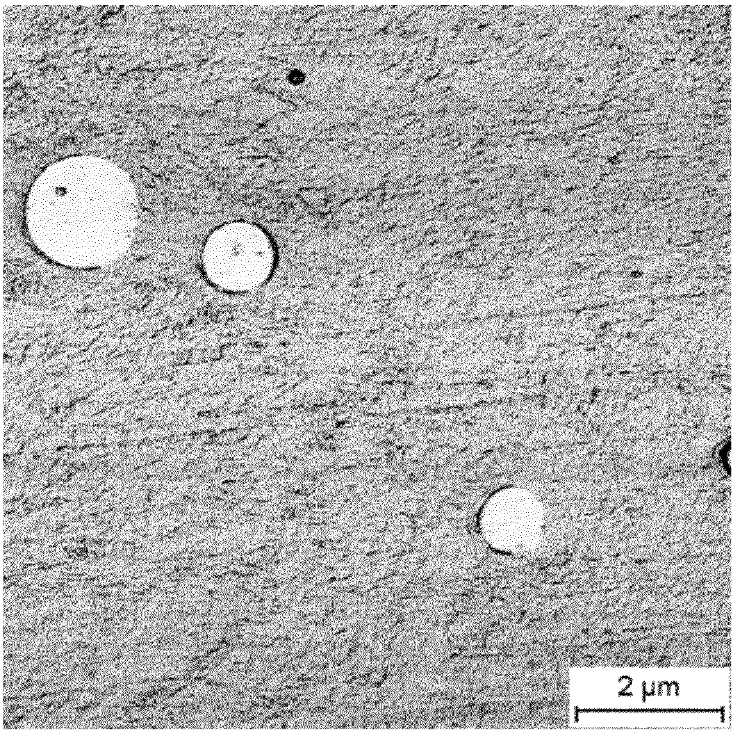

Figure 3

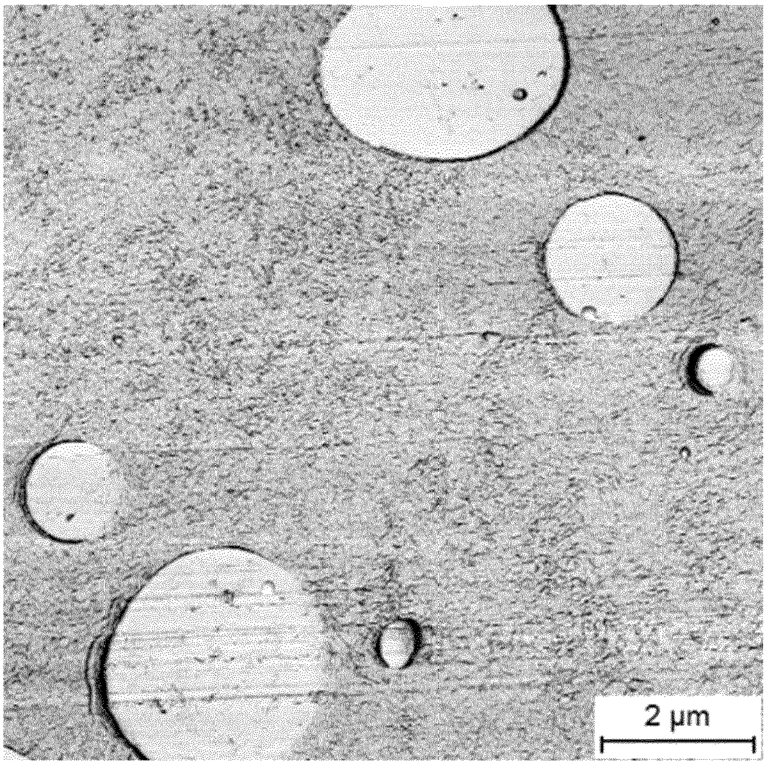

Europäisches Patentamt
European Patent Office
Office européen des brevets

# EUROPEAN SEARCH REPORT

Application Number
EP 24 18 1730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/136774 A1 (ONOGI TAKAYUKI [JP] ET AL) 28 May 2009 (2009-05-28)<br>* examples 1-11 *<br>----- | 1-15 | INV.<br>C08J5/18<br>C08L23/12 |
| A | CN 108 822 404 A (LUO GUOQIU)<br>16 November 2018 (2018-11-16)<br>* paragraphs [0006] - [0008] *<br>----- | 1-15 | |
| A | CN 106 349 582 A (WEI ZHONG)<br>25 January 2017 (2017-01-25)<br>* paragraphs [0004] - [0008] *<br>----- | 1-15 | |

TECHNICAL FIELDS SEARCHED (IPC)

C08J
C08L

The present search report has been drawn up for all claims

1

| Place of search | Date of completion of the search | Examiner |
|---|---|---|
| Munich | 5 December 2024 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 18 1730

This annex lists the patent family members relating to the patent documents cited in the above-mentioned European search report. The members are as contained in the European Patent Office EDP file on The European Patent Office is in no way liable for these particulars which are merely given for the purpose of information.

05-12-2024

| Patent document cited in search report | Publication date | Patent family member(s) | Publication date |
|---|---|---|---|
| US 2009136774 A1 | 28-05-2009 | EP 2006326 A2 | 24-12-2008 |
| | | KR 20090005089 A | 12-01-2009 |
| | | TW 200806730 A | 01-02-2008 |
| | | US 2009136774 A1 | 28-05-2009 |
| | | WO 2007114134 A1 | 11-10-2007 |
| CN 108822404 A | 16-11-2018 | NONE | |
| CN 106349582 A | 25-01-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101724195 A
- EP 2995641 A1
- WO 2018210854 A1
- WO 2018197034 A1
- WO 2016100660 A1
- US 3511824 A
- WO 2013004781 A1


### Non-patent literature cited in the description


- Elaboration et caractérisation de mélanges de polyméres à base de polypropylène et de polycarbonate à propriétés optimisées. **DAI, S. S.** Doctoral dissertation. Institut National Polytechnique de Lorraine, 2010
- **FAVIS, B. D.** ; **CHALIFOUX, J. P.** The effect of viscosity ratio on the morphology of polypropylene/-polycarbonate blends during processing. *Polymer Engineering & Science*, 1987, vol. 27 (21), 1591-1600
- **ABBAS HUMMDAI, F.** Mechanical, Electrical and Thermal Properties of Polypropylene and Polycarbonate Blend Filled with Carbon Black. *Engineering and Technology Journal*, 2012, vol. 30 (12), 2076-2086
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950